# EUROPÄISCHE PATENTANMELDUNG

(11) **EP 2 716 440 A1**
(43) Veröffentlichungstag der Anmeldung: **09.04.2014**
(21) Anmeldenummer: 12187119.8
(22) Anmeldetag: 03.10.2012
(51) Int. Cl.: B32B 5/20, B29C 51/14, B62D 29/04

(54) **Verbundbauteil**

(71) Anmelder: Senoplast Klepsch & Co. GmbH, 5721 Piesendorf (AT)
(72) Erfinder: Klepsch, Wilhelm, 5710 Kaprun (AT)
(74) Vertreter: Schwarz & Partner

(57) **Zusammenfassung**

Verbundbauteil für ein Karosserieteil eines Fahrzeugs, welches dreidimensional geformt ist, umfassend einen vorderseitigen Verbundkörper (1), einen rückseitigen Verbundkörper (3) und eine dazwischen angeordnete Isolationsschicht (2), wobei der vorderseitige Verbundkörper (1) eine Farbschicht (ii) und eine mindestens einschichtige Substratschicht (iii) aufweist, welche als Hauptbestandteil einen thermoplastischen Werkstoff aufweist, wobei der rückseitige Verbundkörper (3) eine mindestens einschichtige Trägerschicht (vii), welche als Hauptbestandteil einen thermoplastischen Werkstoff aufweist, und eine rückseitige Deckschicht (viii) aufweist, wobei die Isolationsschicht (2) zumindest einschichtig ist und einen geschäumten Polymerwerkstoff aufweist.

## Beschreibung

Die Erfindung betrifft einen Verbundbauteil für ein Karosserieteil eines Fahrzeugs, welches dreidimensional geformt ist. Weiters betrifft die Erfindung ein Verfahren zu dessen Herstellung, die Verwendung des Verbundbauteils für eine Fahrzeugkarosserie sowie eine Fahrzeugkarosserie selbst.

### Hintergrund der Erfindung

Elektromobilität gewinnt in Zeiten steigender Energiepreise für fossile Brennstoffe, kontinuierlich zunehmenden Emissionen an Kohlendioxid, welches mitverantwortlich für den Treibhauseffekt ist, und den nach wie vor niedrigen Wirkungsgraden von mit Verbrennungsmotoren betriebenen Fahrzeugen zunehmend an Bedeutung. Erreichen herkömmliche mit Verbrennungsmotoren betriebene Kraftfahrzeuge einen Wirkungsgrad von 25 - 35% so können mit Elektrofahrzeugen Wirkungsgrade von bis zu 85% erreicht werden.

Dennoch ist die Entwicklung der Elektromobilität gebremst, da die erfolgreiche Markteinführung noch die Lösung einiger gravierender technischer Probleme voraussetzt, wie die Energieversorgung der Antriebsmotoren bei tiefen Temperaturen und über längere Fahrzeiten oder Distanzen, das Wärmemanagement im Fahrzeuginneren, die Masse der Akkumulatoren usw.

Ein überaus großes Augenmerk wird bei der Entwicklung der Elektromobile der Thematik Leichtbau gewidmet. Aufgrund schwergewichtiger Energiespeicher ist die Gewichtsreduktion der übrigen Komponenten ein Hauptangriffspunkt, insbesondere der Fahrzeugbeplankung, um höhere Reichweiten zu erzielen. Neben dieser Thematik sind aber auch im Bereich des Wärmemanagements dieser Fahrzeuge Verbesserungen erforderlich, da bei hohen Umgebungstemperaturen viel elektrische Energie aufgewendet werden muss, um den Interieurbereich zu kühlen, während bei niedrigen Außentemperaturen gespeicherte Energie in Form von Wärme für die Interieurbereich aufgewendet werden muss, da die Abwärme eines Verbrennungsmotors fehlt. Diese aufgewendete Energie geht zu Lasten der Reichweite.

Die Fahrzeugbeplankung muss bestimmte Produktanforderungen erfüllen: Geringes Eigengewicht; gute mechanische Eigenschaften wie Steifigkeit, Duktilität und die Art, wie das Material bei mechanischer Überbelastung bricht (Vermeidung von Splitterbruch); Witterungs- und Kratzbeständigkeit; Chemikalienbeständigkeit; verschiedene Einfärbemöglichkeiten; möglichst geringe Wärmeausdehnung, um möglichst geringe Spaltmaße zu ermöglichen, sowie eine möglichst hohe Isolierwirkung des Bauteiles.

### Stand der Technik

Nach Stand der Technik wird zurzeit neben Stahl als meisteingesetztem Werkstoff eine Kombination unterschiedlicher Werkstoffe verwendet, um die genannten Anforderungen zumindest einigermaßen zu erfüllen. Für die Darstellung von flächigen Fahrzeugbauteilen werden sogenannte Schichtverbundwerkstoffe, auch Laminate genannt, eingesetzt.

Schichtverbundwerkstoffe sind in der Literatur umfassend bekannt. Prinzipiell unterscheidet der Fachmann in Verbundwerkstoffe, welche als plane, quasi zweidimensionale Körper dargestellt werden und dreidimensional verformte Körper. Als Beispiel für Verbundwerkstoffe mit zweidimensionaler Geometrie können Sandwichpaneele aus dem Leichtbau genannt werden. Dem gegenüber stehen dreidimensional verformte Verbundwerkstoffe, welche häufig im Fahrzeugbau verwendet werden und auf Grund der geometrischen Formgebung komplexer in ihrer Herstellung sind. Der Stand der Technik gibt verschiedene Lösungen an, wobei prinzipiell unterschieden werden kann zwischen mehrschichtigen Verbundkörpern, welche nur an einer Seite mit einem dekorativen Material versehen sind und gattungsgemäßen Lösungen mit beidseitig dekorativen Schichten.

Die US 2005/0170189 A1 offenbart einen Verbundbaukörper, bestehend aus einer Außenschicht aus Thermoplast oder Metall, einer Trägerschicht aus verstärktem PU und einer dekorativen Innenschicht, von der explizit beschrieben wird, dass diese für ausschließlich dekorative Zwecke gedacht ist, wobei die drei Schichten miteinander verbunden sind. Das verwendete PU System enthält dabei ein oder mehrere "Mould-Release" Additiv(e). Gezeigt werden auch die Prozessabläufe zur Herstellung von Bauteilen dieser Art. Die verwendeten Folien können tiefgezogen oder geformt werden. Als Thermoplaste werden ABS, ASA, PMMA, ABS-PC, ASA-PC, PVC, PP, PE oder TPU oder Kombinationen daraus genannt. Die dekorative Rückseite kann aus Thermoplasten, Leder, Schäumen etc. bestehen.

### Aufgabenstellung und Lösung

Der Stand der Technik offenbart keinen mehrschichtigen Schichtverbundwerkstoff, welcher die in der Elektromobilität erforderlichen - oben dargestellten - Eigenschaften in ausreichendem Maße erfüllt.

Aufgabenstellung der vorliegenden Erfindung war es daher, ein Verbundbauteil zur Verwendung als Fahrzeugverkleidungsteil zu entwickeln, welcher ein höchstmögliches Maß an Funktionsintegration aufweist und auch noch isolierend wirkt.

Diese Aufgabe wird gelöst durch einen Verbundbauteil für ein Karosserieteil eines Fahrzeugs, welches dreidimensional geformt ist, umfassend einen vorderseitigen Verbundkörper (1), einen rückseitigen Verbundkörper (3) und eine dazwischen angeordnete Isolationsschicht (2), wobei der vorderseitige Verbundkörper (1) eine Farbschicht (ii) und eine mindestens einschichtige Substratschicht (iii) aufweist, welche als Hauptbestandteil einen thermoplastischen Werkstoff aufweist, wobei der rückseitige Verbundkörper (3) eine mindestens einschichtige Trägerschicht (vii), welche als Hauptbestandteil einen thermoplastischen Werkstoff aufweist, und eine rückseitige Deckschicht (viii) aufweist, wobei die Isolationsschicht (2) zumindest einschichtig ist und einen geschäumten Polymerwerkstoff aufweist. Mit diesem mindestens fünfschichtigen Aufbau werden die gestellten Aufgaben an ein geringes Eigengewicht bei guten mechanische Eigenschaften sowie eine möglichst hohe Isolierwirkung des Verbundbauteils erstmals zufriedenstellend gelöst.

Bevorzugt ist die Isolationsschicht (2) mit Fasern verstärkt, vorzugsweise mit Glasfasern. Der Anteil an Fasern in der Isolationsschicht (2) beträgt - bezogen auf die Isolationsschicht (2) bevorzugt über 10 Gew.%, besonders bevorzugt über 20 Gew. % und im Idealfall über 30 Gew. %. Werte bis zu 50 Gew. % wurden untersucht.

Studien der Erfinder haben ergeben, dass der erfindungsgemäße Effekt dann besonders gut ist, wenn das Verbundbauteil eine Wärmeleitfähigkeit λ gemessen nach EN ISO 22007-2:2012 (Ausgabestand 2012-03-01): Kunststoffe - Bestimmung der Wärmeleitfähigkeit und der Temperaturleitfähigkeit, Teil 2: Transientes Flächenquellenverfahren (Hot- Disk- Verfahren) von maximal 0,60 W/m K, vorzugsweise maximal 0,40 W/m K aufweist. Durch Bereitstellen eines Verbundbauteils, das einen Wärmedurchgangswiderstand λ von maximal 0,60 W/m K, vorzugsweise maximal 0,40 W/m K, und einen zumindest fünfschichtigen Aufbau aufweist, werden die oben genannten Aufgaben auf besonders gute Art gelöst, wie auch die Ausführungsbeispiele am Ende der Beschreibung zeigen.

Bevorzugt ist vorgesehen, dass der vorderseitige Verbundkörper (1) auf der Farbschicht (ii) eine vorderseitige Deckschicht (i) aufweist, welche im Wesentlichen transparent ausgebildet ist. Unter im Wesentlichen transparent ist gemeint, dass die Deckschicht (i) durchscheinend für sichtbares Licht ist, sodass die darunterliegende Farbschicht noch ohne störende Schleierbildung bzw. Trübung wahr genommen werden kann.

Verwendung findet das Verbundbauteil insbesondere als Karosserieteil für ein Fahrzeug. Besonders bevorzugt wird es für ein das Cockpit und/oder den Kofferraumbereich abdeckendes Karosserieteil verwendet, da das Verbundbauteil ja sowohl das Interieur als auch das Exterieur bildet.

Für die Herstellung des Verbundbauteils wird weiter unten noch ein Herstellungsverfahren beschrieben.

Um nun Schichtverbundwerkstoffe mit dem komplexen und doch sehr unterschiedlichem Anforderungsprofil von Karosseriebauteilen für die E- Mobilität darzustellen, ist es im ersten Schritt erforderlich, die Funktionalität des Gesamtverbundes und in einem zweiten Schritt die Funktionen, welche die jeweiligen Schichten im einzelnen zu übernehmen haben, zu definieren:

### Anforderungen an die Funktionen des Gesamtverbundes zur Herstellung von Karosserieteilen für die Elektromobilität:

Neben der bereits zuvor erwähnten Steifigkeit und einer möglichst geringen Wärmeleitfähigkeit ist die kosteneffiziente Darstellung ein wichtiger Faktor. Werkstoffe mit niedriger Wärmeleitfähigkeit wie z.B. Polymerschäume zeigen oft eine sehr niedrige Steifigkeit. Es musste also ein Weg gefunden werden, diese zu versteifen: Dazu wurden die Schäume an der Ober- und Unterseite mit steifen Randschichten versehen. Damit hat man zwar das Problem der Steifigkeit gelöst, allerdings sind Leichtbaupaneele in der Regel flach ohne geometrische Verformungen in die dritte Dimension. Es musste daher versucht werden diese Struktur auf dreidimensional verformte Teile zu übertragen. Der Ansatz, der verfolgt wurde war, die ober- und unterseitigen Randschichten als dreidimensional verformte, steife Freiformflächen auszubilden und in Folge mit dem Schaum als isolierendes Verbindungselement zusammen zu fügen. Als dreidimensional verformte Randschichten können dabei Spritzgussteile angedacht werden. Diese haben allerdings den Nachteil, dass sie in nachfolgenden Schritten dekoriert oder lackiert werden müssen. Außerdem führen die hohen Formenkosten zu kommerziellen Problemen. Ziel war es daher auch, die dreidimensional geformten Randschichten zur Übernahme von zusätzlichen Funktionalitäten zu nutzen.

Überraschenderweise wurde gefunden, dass mehrschichtige thermoplastische Verbundkörper als vorderseitige- und rückseitige Randschichten sowohl thermoformbar sind und beim erfindungsgemäßen Aufbau zusätzliche Funktionen übernehmen können. Durch den mehrschichtigen Aufbau können gegebenenfalls coextrudierte Schichten als Außenschicht die Funktionalität von Lackoberflächen und die Innenseite die Funktion von Innendekorteilen übernehmen.

Thermoformen als Verarbeitungsverfahren hat den Vorteil gegenüber dem Spritzgussverfahren, dass es das Anfertigen von sehr großen Bauteilen ermöglicht, ohne dabei Spritzgußmaschinen mit enormen Schliesskräften zur Verfügung haben zu müssen und gleichzeitig aber auch die Formenkosten deutlich geringer sind. Zusätzlich würde die Integration verschiedener Funktionalitäten in einen Bauteil in der Regel auch in dem Vorteil einer möglichst kostengünstigen Darstellung resultieren

### Anforderungen an die Funktionen der einzelnen Schichten des Gesamtverbundes Vorderseitiger Verbundkörper:

Der vorderseitige Verbundkörper übernimmt die Funktionalität der Dekoration, des Schutzes gegen Umwelteinflüsse und ist daher eingefärbt in der gewünschten Farbe des Fahrzeugs, ist kratz- und chemikalienfest und UV- beständig. Vorzugsweise sollte er noch verformbar sein, eine niedrige Wärmeleitfähigkeit und eine hohe Wärmeformbeständigkeit aufweisen. Zusätzlich hat er in einer Teilfunktion auch noch Einfluss auf die Steifigkeit des Gesamtbauteiles.

### Isolationsschicht:

Ist gekennzeichnet durch eine möglichst hohe Wärme- bzw. Kälteisolierung, kann aber bei entsprechenden Materialien auch zur Steifigkeit beitragen.

### Rückseitiger Verbundkörper:

Übernimmt die Funktionalität der Dekoration im Bereich der Insassenkabine, sollte daher alle Attribute aufweisen, welche man von Fahrzeugkabinen her kennt: Definierte Oberflächengüte matt bis glänzend, gegebenenfalls genarbt, eingefärbt, angenehme Griffhaptik wie Leder und dies mit hoher Steifigkeit.

Für die Gesamtfunktion des Bauteils ist es daher sowohl für kalte als auch heiße Umgebungsbedingungen Ziel führend, Kraftfahrzeugsbeplankungen vorliegen zu haben, welche neben eines geringen Gewichtes auch noch einen möglichst hohen Isolierwert aufweisen. Dieser wird charakterisiert durch die Wärmeleitfähigkeit λ.

Nachfolgend sind Wärmeleitfähigkeiten zusammengefasst:

**Tab. 1: Überblick über die Wärmeleitfähigkeit und Dichte einiger Werkstoffe, welche im Kfz-Bereich Verwendung finden.**

| Werkstoff | Wärmeleitfähigkeit (λ) [W/m K] | Dichte p [g/cm³] |
|---|---|---|
| Aluminium | 237 | 2,8 |
| Stahl | 45-55 | 7,85-7,87 |
| Vergleich: Luft | 0,030 | 0,0012 |

Wie man aus der Tabelle 1 erkennen kann, zeigen gerade herkömmliche, in der Fahrzeugindustrie vielfach verwendete Werkstoffe für das Anforderungsprofil der Elektromobilität deutliche Mängel: Metalle zeigen eine gegenüber Kunststoffen wesentlich erhöhte Dichte und auch eine deutlich höhere Wärmeleitfähigkeit.

### Detaillierte Beschreibung der Erfindung

### Optionale vorderseitige Deckschicht (i)

In einer Ausführungsvariante kann vorgesehen sein, dass die optionale transparente vorderseitige Deckschicht (i) ein Acrylatpolymer oder Acrylatcopolymer, im bevorzugten Fall Polymethylmethacrylat (PMMA), impact modifiziertes PMMA (HI-PMMA) oder ein Blend aus PMMA und HI-PMMA umfasst. Die wichtigsten Eigenschaften von PMMA sind in Hans Domininghaus, "Die Kunststoffe und ihre Eigenschaften", Ausgabe 1998, S 455 - 481 zusammengefasst.

In einer alternativen Ausführungsvariante kann vorgesehen sein, dass die vorderseitige Deckschicht (i) ein Lacksystem oder eine Lackschicht ist. Diese kann z.B. auf Acrylat-, Polyurethan- oder Urethanacrylatbasis aufgebaut ist. Bei Lacksystemen oder Lackschichten bestehen unterschiedliche Möglichkeiten des Aufbringens im Verlauf des Herstellungsprozesses des Bauteils: Der Bauteil kann im fertigen Zustand mit einer Klarlackschicht versehen werden, alternativ dazu besteht die Möglichkeit, das Ausgangsprodukt des deckseitigen Mehrschichtverbund mit einem verformbaren Lack zu beschichten. Dieser Lack kann auch nach dem Thermoformen oder nach dem Fertigstellen des Bauteils ausgehärtet werden.

Acrylatpolymer oder Acrylatcopolymer wie auch die beschriebenen Lackschichten oder Lacksysteme als Werkstoffe für die vorderseitige Deckschicht gewährleisten neben der sehr guten UV- Beständigkeit auch eine sehr gute Kratz- und Chemikalienbeständigkeit, hohen Oberflächenglanz oder auch Mattigkeit. Das Vorhandensein einer transparenten Deckschicht (i) ist speziell bei der Verwendung von Effektpigmenten in der Farbschicht (ii) von Vorteil, da in diesem Fall ein sehr hoher Oberflächenglanz erzielbar ist.

Unabhängig davon, ob die vorderseitige Deckschicht (i) ein thermoplastisches Acrylat(co)polymer oder Lackschicht/-system ist, kann die vorderseitige Deckschicht (i) UV-Additive im Ausmaß von jeweils 0,01 bis 8 Gew. % aufweisen. Dadurch werden die in der darunter liegenden Farbschicht (ii) eingesetzten Werkstoffe und Farbmittel vor UV-Einstrahlung zusätzlich geschützt, wodurch die Farbstabilität sowie das mechanische Verhalten über die Verwendungsdauer bei Bestrahlung mit UV-Licht deutlich verbessert werden.

Die vorderseitige Deckschicht (i) kann gegebenenfalls mittels einer Schutzfolie für den Transport, die Lagerung und für den Verformungsprozess versehen sein. Sie schützt die Hochglanzoberfläche während der Handhabung vor mechanischer Beschädigung. In der Regel wird diese erst nach der Endmontage des Bauteils abgezogen.

Die vorderseitige Deckschicht (i) kann auch genarbt sein. Dadurch sind für spezielle Bauteile auch besondere optische Oberflächeneigenschaften erzielbar.

### Farbschicht (ii)

Die Farbschicht (ii) zeigt eine Färbung und enthält zu diesem Zweck Farbmittel. In einer Ausführungsvariante ist vorgesehen, dass die Farbschicht (ii) einen thermoplastischen Werkstoff umfasst. Als thermoplastische Werkstoffe können beispielsweise PMMA (Polymethylmethacrylat), ABS (Acrylnitrilbutadienstyrol) oder ASA (Acrylnitril- Styrol-Acrylsäureester Terpolymer) eingesetzt werden. Im Fall des Fehlens der optionalen transparenten Deckschicht (i), wird der thermoplastische Werkstoff vorteilhaft aus jenen Rohstoffen selektiert, welche eine gute UV-, Kratz- und Chemikalienbeständigkeit aufweisen, wie zum Beispiel PMMA (Polymethylmethacrylat) oder ASA (Acrylnitril- Styrol-Acrylsäureester Terpolymer). Insgesamt haben sich die Materialien ABS, ASA, PC (Polycarbonat), Blends von PC mit ABS und/oder ASA, TPO (Thermoplastische Elastomere auf Olefinbasis), PE (Polyethylen) und PP (Polypropylen) als vorteilhaft für Fahrzeugteile erwiesen.

In einer weiteren Variante kann die Farbschicht (ii) aus einer Lackschicht bestehen, welche Farbmittel enthält.

Der Farbschicht (ii) können UV-Additive zugesetzt sein. Die UV-Additive sind gegebenenfalls im Ausmaß von jeweils 0,01 bis 8 Gew. % vorhanden. Das Aufbringen kann dabei in derselben Art und Weise wie bei der optionalen transparenten Deckschicht (i) an unterschiedlichen Stadien des Herstellprozessablaufes erfolgen.

Die Farbschicht (ii) dient einerseits zur Farbgebung und gegebenenfalls auch zur UV-Stabilisierung des Gesamtverbundes.

### Substratschicht (iii) des vorderseitigen Verbundkörpers

Die Substratschicht (iii) des vorderseitigen Verbundkörpers (1) kann einlagig oder mehrlagig ausgebildet sein. Diese Substratschicht (iii) stellt bevorzugt den prozentuell größten Anteil an der Gesamtschichtstärke des vorderseitigen Verbundkörpers (1) dar. Als Hauptbestandteil in Gew. % weist die Substratschicht (iii) - unabhängig ob ein- oder mehrlagig - einen thermoplastischen Werkstoff auf. Sind mehrere thermoplastische Werkstoffe vorhanden, so ist die Summe aller thermoplastischen Werkstoffe als Hauptbestandteil zu sehen. In einer bevorzugten Ausführungsvariante ist das rheologische Verhalten dieses(r) thermoplastischen Polymers(e) mit dem der optionalen Deckschicht (i) und der Farbschicht (ii) in der Art und Weise abgestimmt, dass Substratschicht (iii) (oder die einzelnen Lagen der Substratschicht), Farbschicht (ii) und gegebenenfalls Deckschicht (i) im Coextrusionsverfahren miteinander verarbeitet werden können, sodass der vorderseitige Verbundkörper (1) ein Coextrudat dieser Schichten aufweist.

Bevorzugt sind im Falle eines mehrlagigen Aufbaues der Substratschicht (iii) des vorderseitigen Verbundkörpers (1) die einzelnen Lagen (iii', iii", üi"') der Substratschicht (iii) coextrudiert. Dazu ist es vorteilhaft, wenn die Materialien der einzelnen Lagen miteinander abgestimmt sind, dass eine chemische Verträglichkeit zwischen den einzelnen Schichten des vorderseitigen Verbundkörpers (1) besteht, um eine ausreichende Haftung zwischen den einzelnen Schichten zu gewährleisten. Bei unverträglichen Polymeren können Delaminationen auftreten. Gegebenenfalls kann der Substratschicht (iii) des vorderseitigen Verbundkörpers (1) Recyclat, Mahlgut oder Regenerat zugesetzt werden, solange die optischen und mechanischen Eigenschaften im Rahmen der vorgegebenen Anforderung liegen.

Der Substratschicht (iii) können auch Farbmittel oder auch optional UV- Additive zugesetzt werden. Die Farbmittel können sich von allfälligen Farbmitteln in den anderen Schichten unterscheiden. Auf Grund des hohen Anteils an der Gesamtdicke der Substratschicht (iii) am vorderseitigen Verbundkörper (1) beeinflusst diese maßgeblich die mechanischen Eigenschaften wie die Steifigkeit und bildet auch die Basis für ein prozesssicheres Thermoformen. Dementsprechend sollte auch die Wahl der Materialien für die Substratschicht (iii) ausgewählt werden. Als vorteilhaft für Fahrzeugteile haben sich, ABS, ASA, PC, Blends von PC mit ABS und/oder ASA, TPO, PE und PP erwiesen.

### Optionale vorderseitigen Haftvermittlerschicht (iv)

Es kann vorgesehen sein, dass der vorderseitige Verbundkörper (1) eine zur Isolationsschicht (2) angeordnete Haftvermittlerschicht (iii) aufweist. Haftvermittlerschichten werden häufig für die Verankerung unterschiedlicher Schichten zueinander eingesetzt, dies speziell dann, wenn die Werkstoffe der Schichten, die miteinander verankert werden sollen, zueinander nicht optimal verträglich sind. Wenn z.B. Polyolefine (also sehr apolare Werkstoffe) mit Polyurethanen (also sehr polaren Werkstoffe) flächig miteinander verbunden werden, ist eine Haftvermittlerschicht (iv) vorteilhaft. Die Haftvermittlerschicht (iv) wäre vom Schichtaufbau dem vorderseitigen Verbundkörper (1) zugeordnet und kann z.B. mit den übrigen Schichten coextrudiert oder durch Beschichtung jeglicher Art aufgetragen werden. Haftvermittler, welche zum Beispiel Polyolefine mit Polyurethanen verbinden, werden in unterschiedlichen chemischen Strukturen angeboten. Bevorzugt sind Haftvermittler vorgesehen, welche mittels Coextrusion verarbeitbar sind, oder durch Beschichtung appliziert werden und zu einer verbesserten Haftung zwischen der Substratschicht (iii) des vorderseitigen Verbundkörpers (1) und der darunter liegenden Isolierschicht (v) führen.

Werden Werkstoffe in der Substratschicht (iii) des vorderseitigen Verbundkörpers (1) eingesetzt, welche mit dem Material in der Isolierschicht (v) eine ausreichende Haftung eingehen, so erübrigt sich das Einbringen einer optionalen oberen Haftvermittlerschicht (iv). Eine ausreichende Haftung sollte nicht nur die Haftung zum Zeitpunkt unmittelbar nach Herstellung, sondern auch nach den weiteren Verarbeitungsschritten und auch in der Anwendung unter den erforderlichen Bedingungen sowie über den Zeitraum eines Lebenszyklus eines Bauteiles bestehen.

Als Beispiele für Werkstoffe, die zu Haftvermittlerschichten verarbeitet werden, können genannt werden: Copolymere auf Basis Alkylen- Alkylacrylaten und deren chemische Modifikationen oder Styrolcopolymere, deren Derivate und Modifikationen. Bei Polyolefinen können zum Beispiel Ethylencopolymere wie Ethylenvinylacetat eingesetzt werden.

Die vorderseitige Haftvermittlerschicht (iv) kann Farbmittel aufweisen.

### Isolationsschicht (v)

Zum Erzielen der beschriebenen Wärmedämmung des erfindungsgemäßen Bauteils ist eine entsprechende Isolationsschicht erforderlich. Wie aus Tabelle 1 hervorgeht, können dazu in bevorzugtem Masse polymere Schäume auf Grund ihrer ausgezeichneten Isolierwirkung verwendet werden. Zusätzlich trägt ein solcher Schaum auch noch zu Steifigkeit des gesamten Bauteiles bei. Im Rahmen dieser Erfindung können sowohl offen- als auch geschlossenzellige Schäume auf thermoplastischer als auch duroplastischer Basis verwendet werden. Im Bereich der thermoplastischen Schäume sind EPS (expandiertes Polystyrol), EPP (expandiertes Polypropylen), EPE (expandiertes Polyethylen), EPET (expandiertes Polyethylentherephtalat) oder andere Schäume denkbar. Auch Schäume auf biopolymerer Basis sind möglich.

Im Bereich der duroplastischen Schäume können beispielhaft die erfindungsgemäß bevorzugten Polyurethanschäume genannt werden. Polyurethane werden mittels sogenannter Polyadditionsreaktionen aus zwei verschiedenen bi- oder multifunktionellen Verbindungen zu Polyaddukten ohne Abspaltung von Nebenprodukten dargestellt. Im Allgemeinen geschieht dies durch Reaktion eines Alkohols oder Phenols mit einem Isocyanat. Für die Herstellung von Polyurethanen werden mehrfache Alkohole oder Phenole mit mehrfach- Isocyanaten verwendet. Diesem Reaktionsgemisch können unterschiedliche Zusatzstoffe beigemengt sein. So können als Katalysatoren Verbindungen eingesetzt werden, die beispielsweise die Reaktion der beiden Komponenten stark beschleunigen. In Frage kommen beispielsweise tertiäre Amine und/oder organische Metallverbindungen, insbesondere Zinnverbindungen.

Als Treibmittel können allgemein bekannte chemisch oder physikalisch wirkende Verbindungen eingesetzt werden. Als chemisch wirkendes Treibmittel wird bevorzugt Wasser eingesetzt, welches durch die Reaktion mit Isocyanatgruppen Kohlendioxid bildet. Die Menge der eingesetzten Treibmittel richtet sich nach der angestrebten Dichte der Schaumstoffe. Die Isolierwirkung kann zusätzlich noch erhöht werden, indem man die Polyurethanporen mit Gasen füllt. Geeignet dafür sind beispielsweise Cyclopentan oder halogenierte Kohlenwasserstoffe. Diese werden als physikalische Treibmittel vor der Polyadditionsreaktion den Monomeren zugesetzt. Die unterschiedlichen Treibmittel können einzeln oder in beliebigen Mischungen untereinander zum Einsatz kommen.

Weiters können der Isolierschicht Füllstoffe und Fasern unterschiedlichster Art und Pigmente zum Einfärben beigemengt werden. Fasern führen zu einer Verstärkung des Verbundelements und damit zu einer Verbesserung der mechanischen Eigenschaften, erhöhen aber auch die Wärmeleitfähigkeit. Übliche, für diesen Zweck bekannte und geeignete Fasern sind aus Glas- oder anderen mineralische Fasern, Basaltfasern, Kohlefasern, Fasern auf Basis nachwachsender Rohstoffe (also Naturfasern) wie Sisal, Jute oder Flachsfasern, aber auch Fasern auf Basis von Kunststoffen, wie beispielsweise Polyamidfaser, Polyesterfaser oder Polyurethanfasern. Auch beliebige Gemische aller genannten Fasern sind denkbar. Die Fasern können auch in Form von Endlosglasmatten oder Naturfasermatten, Glasfaserrovings oder Naturfaserrovings, in Form von üblichen Matten, Geweben, Matten, Rovings oder Gewirken eingesetzt werden. Bevorzugt setzt man Glasfaser ein. Im Fall, dass die Isolierschicht chemisch geschäumt wird, werden diese Stoffe dem Reaktionsgemisch zugesetzt.

Weiterhin können Polyurethane Füllstoffe enthalten, die im Allgemeinen zu einer Verstärkung des Polyurethans und damit zu einer Verbesserung seiner mechanischen Eigenschaften führen. Bei den verwendeten Füllstoffen kann es sich um sogenannte Glasflakes oder mineralische Stoffe wie Mica oder Glimmer handeln. Es können aber auch Glasmicroballons zugesetzt werden, da dadurch eine Verbesserung der Isolierwirkung auf Grund der eingeschlossenen Gaskavitäten erreicht wird. Auch das Brandverhalten der Isolierschicht (v) kann durch geeignete Additive positiv beeinflusst werden. Beispielsweise kann TCPP (Tris(2-chlorisopropyl)phosphat) zugesetzt werden.

### Optionale rückseitige Haftschicht (vi)

Es kann weiters vorgesehen sein, dass der rückseitige Verbundkörper (3) eine zur Isolationsschicht (2) angeordnete Haftvermittlerschicht (vi) aufweist Die rückseitige Haftschicht entspricht von der Funktionalität der optionalen vorderseitigen Haftschicht (iv). Die optionale rückseitige Haftschicht (vi) wird dem rückseitigen Verbundkörper zugeordnet und führt zu einer verbesserten Haftung zwischen der Trägerschicht (vii) des rückseitigen Verbundkörpers (3) und der darüber liegenden Isolierschicht (v).

Werden Werkstoffe in der Trägerschicht (vii) des rückseitigen Verbundkörpers (3) eingesetzt, welche mit dem Material in der Isolierschicht (v) eine ausreichende Haftung eingehen, so erübrigt sich das Einbringen einer rückseitigen Haftvermittlerschicht (iv). Eine ausreichende Haftung sollte nicht nur die Haftung zum Zeitpunkt unmittelbar nach Herstellung sondern auch nach den weiteren Verarbeitungsschritten und auch in der Anwendung unter den erforderlichen Bedingungen sowie über den Zeitraum eines Lebenszyklus eines Bauteiles bestehen.

Die rückseitige Haftvermittlerschicht (iv) wird entweder mit den übrigen Schichten des rückseitigen Verbundkörper coextrudiert oder durch Beschichtung jeglicher Art auf die Trägerschicht (vii) aufgetragen. Das Auftragen kann dabei entweder auf das noch nicht thermogeformte rückseitige Coextrudat oder aber auch auf das eine dreidimensionale Geometrie bildende thermogeformte Coextrudat erfolgen.

Die rückseitige Haftvermittlerschicht (iv) kann Farbmittel aufweisen.

### Trägerschicht (vii) des rückseitigen Verbundkörpers (3)

Die Trägerschicht (vii) des rückseitigen Verbundkörpers (3) kann einlagig oder mehrlagig ausgebildet sein und stellt bevorzugt den prozentuell größten Anteil an der Gesamtschichtstärke des rückseitigen Verbundkörpers (3) dar. Die Trägerschicht (vii) umfasst ein thermoplastisches Polymer. In einer bevorzugten Ausführungsvariante ist das rheologische Verhalten dieser thermoplastischen Polymere mit dem der rückseitigen Deckschicht (viii) und der optionalen unteren Haftschicht (vi) in der Art und Weise abgestimmt, dass alle Schichten (auch einzelne Lagen der Trägerschicht (vii)) im Coextrusionsverfahren miteinander verarbeitet werden können, sodass der rückseitige Verbundkörper (3) ein Coextrudat dieser Schichten aufweist.

Im Falle eines mehrlagigen Aufbaues der Trägerschicht (vii) des rückseitigen Verbundkörpers (3), ist es vorteilhaft, wenn auch dessen thermoplastische Schichten rheologisch und in ihrer Verträglichkeit miteinander abgestimmt sind, um eine ausreichende Haftung zwischen den einzelnen Schichten zu gewährleisten. Bei unverträglichen Polymeren können Delaminationen auftreten. Gegebenenfalls kann der Trägerschicht (vii) des rückseitigen Verbundkörpers (3) Recyclat, Mahlgut oder Regenerat zugesetzt werden, solange die optischen und mechanischen Eigenschaften im Rahmen der vorgegebenen Anforderung liegen.

Optional können dieser Schicht auch Farbmittel zugesetzt werden. Die Farbmittel können sich von allfälligen Farbmitteln in den anderen Schichten unterscheiden. Auf Grund des hohen Anteils der Trägerschicht (vii) an der Gesamtdicke des rückseitigen Verbundkörpers (3) beeinflusst die Trägerschicht (vii) massgeblich die Steifigkeit und bildet auch die Basis für ein prozesssicheres Thermoformen. Dementsprechend sollte auch die Wahl der Materialien für die Trägerschicht (vii) ausgewählt werden. Als vorteilhaft für Fahrzeugteile haben sich ABS, ASA, PC, Blends von PC mit ABS und ASA, PE, PP und TPO's erwiesen.

### Rückseitige Deckschicht (viii)

Die rückseitige Deckschicht (viii) wird mit den darüber liegenden Schichten coextrudiert oder laminiert und erfüllt dekorative Zwecke. So sollte sie erfindungsgemäß die optischen als auch haptischen Anforderungen von Kraftfahrzeuginterieurverkleidungsteilen aufweisen: eingefärbt, matt bis glänzend, kratz- und abriebfest, optional genarbt und/oder mit angenehmer Griffhaptik.

Als Werkstoffe sind je nach Anforderungsprofil geeignet und als Beispiel angeführt: Acrylnitril-Butadien-Styrol Terpolymere (ABS) oder thermoplastische Polyurethan-Elastomere (TPU) bzw. generell thermoplastische Elastomere mit geeigneten Eigenschaften, Polymethylmethacrylat (PMMA), impact modifiziertes Polymethylmethacrylat (HI-PMMA) oder Mischungen aus PMMA und HI-PMMA.

Thermoplastische Elastomere (Kurzzeichen TPE) sind Kunststoffe, die sich bei Raumtemperatur vergleichbar den klassischen Elastomeren verhalten, sich jedoch unter Wärmezufuhr plastisch verformen lassen und somit ein thermoplastisches Verhalten zeigen. Sie sind weiters gekennzeichnet durch eine hohe Flexibilität, hohes Dämpfungsvermögen (wodurch sie als Interieurmaterial für Kraftfahrzeuge in besonderem Masse geeignet sind) günstiges Reibungs- und Verschleißverhalten und angenehme lederartige Griffhaptik.

Die Werkstoffe der rückseitigen Deckschicht (viii) sind entweder selbst matt oder werden durch geeignete Zusatzstoffe, sogenannte Mattierungsmittel mattiert, sofern die Anforderung an eine matte Oberfläche besteht. Die zugesetzte Menge beträgt vorzugsweise zwischen 0,1 Gew. % und 15 Gew. %.

Es können aber auch noch andere Additive wie Farbmittel oder Additive zur Verbesserung der Kratzfestigkeit zugesetzt werden.

Das Coextrudieren der rückseitige Deckschicht (viii) an die Oberseite der wesentlich voluminöseren Trägerschicht (vii) des rückseitigen Verbundkörpers (3) bietet dabei den Vorteil, dass der Zusatz an Additiven zur Verbesserung der Mattigkeit und Kratzfestigkeit oder die Verwendung von teuren und/oder speziellen Rohstoffen dabei nur in der dünnen rückseitige Deckschicht (viii) erfolgt, wodurch sich weitere Vorteile ergeben:

Die Verwendung von z. B. thermoplastische Polyurethan-Elastomere (TPU), welche für den erfindungsgemäßen Einsatz geeignet sind, kann nur in sehr dünnen Schichten erfolgen, da diese in der Regel eine geringe Eigensteifigkeit und Wärmeformbeständigkeit zeigen. Würde man Werkstoffe dieser Art als Substrat verwenden, ergäbe sich kein Bauteil, welcher weder bei Raum- noch bei erhöhten Temperaturen die für die Anwendung als Fahrzeugdach erforderliche Steifigkeit zeigt, da bei Sandwichverbunden die Bauteilsteifigkeit in hohem Maße von der Steifigkeit der Randschichten abhängig ist. Würde man also diese (in diesem Fall den rückseitigen Verbundkörper) aus TPU anfertigen, würde man keine ausreichende Bauteilsteifigkeit des Gesamtverbundes erzielen. Die Coextrusion bietet in diesem Fall die Möglichkeit eine dünne, funktionelle Schicht mit den gewünschten optischen und haptischen Eigenschaften aufzubringen, ohne dabei die mechanischen Eigenschaften im Wesentlichen zu verändern, da die mechanischen Eigenschaften hauptsächlich von der Trägerschicht (vii) des rückseitigen Verbundkörpers (3) gebildet werden.

Mattes Polymethylmethacrylat (PMMA) bzw. mattes schlagzähmodifiziertes Polymethylmethacrylat (HI-PMMA), welche für den erfindungsgemäßen Einsatz geeignet sind, können nur in sehr dünnen Schichten eingesetzt werden, da diese sprödes Bruchverhalten zeigen und bei zu hohen Schichtstärken zu einer deutlichen Versprödung des mehrschichtigen, coextrudierten Verbundkörper führen. Auch in diesem Fall ergeben sich die Vorteile der Coextrusion: Die dünne spröde aber kratzfeste Deckschicht bewirkt die gewünschte Oberflächenfunktion während die wesentlich voluminösere Trägerschicht (vii) des rückseitigen Verbundkörpers (3) den Beitrag zur Mechanik des Bauteiles leistet.

### Additive und Zusatzstoffe

Farbmittel: Farbmittel ist nach DIN 55943 die Sammelbezeichnung für alle farbgebenden Stoffe. Farbmittel werden nach ihrer chemischen Struktur in anorganische und organische Farbmittel eingeteilt. Diese können wiederum nach der Herkunft in natürliche und synthetische, oder nach der Farbqualität in weiße, bunte und schwarze Farbmittel, sowie in Effekt- und Leuchtfarbmittel gegliedert werden.

Anorganische Farbmittel sind fast ausschließlich Pigmente. Die organischen Farbmittel werden nach ihrer Löslichkeit im jeweiligen Anwendungsmedium in unlösliche Pigmente oder lösliche Farbstoffe unterteilt. Pigmente sind im Anwendungsmedium unlösliche Farbmittel während Farbstoffe im Anwendungsmedium löslich sind. Effektpigmente können gemäß Literatur, Gunter Buxbaum, "Industrial Inorganic Pigments", Ausgabe 1993, Seite 207- 224 in zwei große Klassen geteilt werden, die Perlglanz- und die Metalleffektpigmente. Pigmente dieser Art können verwendet werden, um spezielle visuelle Effekte zu erzielen, sie können auch in Kombination mit normalen Pigmenten und/oder Farbstoffen eingesetzt werden.

UV-Additive: UV-Additive sind Zusätze, welche den ultravioletten Anteils des Sonnenlichtes, der zerstörende Wirkung auf die chemischen Bindungen in Polymeren aufweist (allgemeine Bezeichnung ist Photodegradation), unterbinden, zumindest zum Teil unterbinden und/oder verzögern. Die Photodegradation bewirkt durch die chemischen Veränderungen im Polymer auch Änderungen im chemischen und physikalischen Verhalten. Bruch, Verfärbung, Farbänderungen sind z. B. Folgen dieser Reaktionen. In Abhängigkeit von der Wirkungsweise dieser UV-Additive unterscheidet man in UV- Absorber und UV-Stabilisatoren. UV-Absorber führen zu einer Absorption des UV Anteils des Lichtes, welcher durch das Polymer hindurchtritt und wandeln diesen in Wärmeenergie um. Als Beispiel für sehr wirksame UV-Absorber können Benzophenone genannt werden. UV- Stabilisatoren hemmen freie Radikale, welche durch die Bestrahlung mit UV-Strahlung entstehen und stoppen die weitere Zersetzung. Als Beispiel für sehr wirksame Stabilisatoren können HALS (hindered amine light stabilizers) genannt werden.

Mattierungsmittel: Als Mattierungsmittel bezeichnet man im Allgemeinen Zusatzstoffe, welche die Oberfläche einer Beschichtung so beeinflussen, dass sich ihr Glanzgrad senkt. Mattierungsmittel bewirken meist eine gezielte Rauhigkeit der Beschichtungsoberfläche, wodurch eine diffuse Lichtstreuung entsteht. Man unterscheidet üblicherweise anorganische und organische Mattierungsmittel, die gleichermaßen (auch als Mischung) der Schicht zugesetzt werden können.

Zu den anorganischen Mattierungsmitteln zählen Kieselsäuren, Silikate sowie auch andere anorganische Füllstoffe und Mischungen aus den genannten. Im erfindungsgemäßen Aufbau können auch Perlglanz- und Metalleffektpigmente neben ihrer Eigenschaft des Erzeugens von speziellen visuellen Effekten als Mattierungsmittel genannt werden.

Als organische Additive zur Verbesserung der Mattigkeit können beispielsweise vernetzte Polymere in Perlenform ("Polymerperlen"), vorzugsweise Acrylatperlen, Perlen aus Polyethylen, Polypropylen oder Copolymerisate eingesetzt werden.

Additive zur Verbesserung der Kratzfestigkeit: Unter Kratzfestigkeit im erfindungsgemäßen Sinne versteht man die Empfindlichkeit einer Oberfläche gegen das Einbringen von oberflächlichen, optisch wahrnehmbarer Defekte durch den Einfluss spitzer Gegenstände. Um diesen Parameter charakterisieren zu können, wird als Messmethodik die Prüfung der Mikroritzhärte nach ISO 4586-2.14 herangezogen. Als Additive zur Verbesserung der Kratzfestigkeit werden sowohl anorganische als auch organische Substanzen verwendet. Als Beispiele seien genannt: Aluminiumoxid, Siliciumoxid, Siloxane, Polyamide, Fettsäuren usw.

### Definitionen

Im Rahmen der Erfindungsbeschreibung werden Begriffe verwendet, die nachfolgend definiert sind:
a. Verbundwerkstoff oder Kompositwerkstoff: Darunter versteht man einen Werkstoff aus zwei oder mehreren verbundenen Materialien. Der Verbundwerkstoff besitzt andere Werkstoffeigenschaften als seine einzelnen Komponenten. Für die Eigenschaften der Verbundwerkstoffe sind stoffliche Eigenschaften und die Geometrie der Komponenten von Bedeutung. Die Verbindung erfolgt durch Stoff- oder Formschluss oder eine Kombination von beidem. Einzelne Komponenten eines Verbundwerkstoffs können dabei selbst wieder Verbundwerkstoffe sein. Bei Teilchen- und Faserverbundwerkstoffen sind Teilchen bzw. Fasern in eine andere Komponente des Verbundwerkstoffes, der so genannten Matrix, eingebettet. In Faserverbundwerkstoffen können die Fasern in eine oder mehrere bestimmte Richtungen verlaufen bzw. Vorzugsrichtungen haben. Faserverbundwerkstoffe können schichtweise hergestellt werden, sind dadurch aber noch keine Schichtverbundwerkstoffe, wenn die aufeinanderfolgenden Schichten gleichartig sind. Schichtverbundwerkstoffe bestehen aus aufeinanderliegenden Schichten unterschiedlicher Anzahl. Der Spezialfall von drei Schichten, davon zwei identische Außenschichten, wird auch als Sandwichverbund bezeichnet.
b. Einlegeteile: Einlegeteile sind im erfindungsgemäßen Fall allgemein Körper, welche im Herstellprozess vor dem Füllen der Form mit den Ausgangskomponenten eines Schaumes in die Form eingelegt werden, damit sie nach dem Ausreagieren in der Isolierschicht eingebettet sind. Sie können in Folge nicht mehr sichtbar (z. B. bei Kabelsträngen) oder teilsichtbar (z. B. bei Schraubanbindungsteilen) sein und tragen zur Funktionsintegration bei.

### Verwendete Messverfahren

### Wärmeleitfähigkeit:

Die Wärmeleitfähigkeit, auch Wärmeleitzahl (λ, 1, k oder κ) eines Körpers ist sein Vermögen, thermische Energie mittels Wärmeleitung zu transportieren. Die (spezifische) Wärmeleitfähigkeit in Watt je Kelvin und Meter ist eine temperaturabhängige Materialkonstante.

Die Wärmeleitfähigkeit ist von der Temperaturleitfähigkeit zu unterscheiden: Diese definiert die Geschwindigkeit, mit der sich eine Temperaturveränderung durch den Stoff ausbreitet. Zu beachten ist ferner, dass sich die Wärmeleitfähigkeit ausschließlich auf die Wärmeleitung bezieht, nicht auf Wärmetransport durch Konvektion oder Wärmestrahlung. Der Wärmeleitwert (absolute Wärmeleitfähigkeit) in Watt je Kelvin (W/K) ist die von der Abmessung eines Bauteils abhängige Kennzahl. Die Wärmeleitfähigkeit λ selbst ist temperaturabhängig und daher werden tabellierte Werte auf eine bestimmte Temperatur bezogen. Für praktische Zwecke wird über kleinere Temperaturbereiche ein konstanter Wert angenommen. Die Wärmeleitfähigkeit kann auch von der Richtung abhängen. Das ist hauptsächlich in Einkristallen oder in polykristallinen Systemen mit gerichteter Kristallisation der Fall.

Bei Kunststoffen findet der Wärmetransport durch Schwingungen der Polymerketten statt. Die Wärme wird durch Fortpflanzung der elastischen Gitterschwingungen über kovalente Bindungen entlang der Polymerketten transportiert sowie über Nebenvalenzbindungen übertragen. Generell gilt, dass gut dämmende Baustoffe einen kleinen λ -Wert (ca. 0,035 W/mK), schlecht dämmende Baustoffe einen hohen λ -Wert (z. B. Beton: 2,30 W/mK) aufweisen. Werkstoffe mit keiner Dämmwirkung liegen wesentlich höher, z. B. Stahl bei 45 bis 55 W/mK.

Die Wärmeleitfähigkeit an Kunststoffen wird spezifiziert in der ÖNORM EN ISO 22007-1 Kunststoffe - Bestimmung der Wärmeleitfähigkeit und der Temperaturleitfähigkeit Teil 1: Allgemeine Grundlagen (ISO 22007-1:2009). Für die Messungen an den Beispielen 1 - 4 wurde ein Messgerät ISOMET Modell 2114 von Applied Precision Ltd (Stavitelska 1, 83104 Bratislava, Slowakei) gemäß der ÖNORM EN ISO 22007-2 Kunststoffe- Bestimmung der Wärmeleitfähigkeit und der Temperaturleitfähigkeit Teil 2: Transientes Flächenquellenverfahren (Hot- Disk-Verfahren), Deutsche Fassung EN ISO 22007- 2:2012 eingesetzt. Im erfindungsgemäßem Fall wird die Wärmeleitfähigkeit λ bei einer Probentemperatur von 21 +/- 0,5°C an den Beispielen bestimmt. Die Messung erfolgt unter Verwendung einer Halbraumsonde mit einem Messbereich von 0,04 bis 0,3 W/mK und einer Messgenauigkeit von 5% beim Messwert 0,001 W/mK. Auf einer Unterlage aus PMMA werden 2 bis 4 Platten des jeweiligen beispielhaften Aufbaues übereinander gestapelt, um die für die Messung erforderlichen Probendicke von mindestens 10 mm zu erreichen. Dabei wird die Schichtreihenfolge so gewählt, dass die Messsonde auf die jeweils dickere Seite des vorder- oder rückseitigen Verbundkörpers montiert wird. Es wurde darauf geachtet, dass dabei die einzelnen Lagen der erfindungsgemäßen Verbundkörper eng geschlichtet waren, sodass sich kein Luftspalt dazwischen ergab. Für einen guten thermischen Kontakt zur Probenoberfläche und der Minimierung eventueller Luftspalte im Stapel wurde die Sonde mit einem Anpressdruck von ca. 30 kPa beschwert. Die Probekörpergröße war mindesten 7 cm im Quadrat. Es wurde keine (TYP) Wärmepaste verwendet. Je Schichtaufbau wurden 5 Messungen ermittelt, das Ergebnis entspricht dem Mittelwert er jeweils 5 Messungen.

### Herstellung der vorderseitigen und rückseitigen Verbundkörper (1, 3)

Sowohl der vorderseitige Verbundkörper (1) umfassend die optionale, transparenten Deckschicht (i), die Farbschicht (ii), die Substratschicht (iii) sowie die optionale vorderseitige Haftvermittlerschicht (iv)) als auch der rückseitige Verbundkörper (3) umfassend die optionalen rückseitige Haftvermittlerschicht (vi), die Trägerschicht (vii) sowie die rückseitige Deckschicht (viii) werden bevorzugt im Coextrusionsverfahren hergestellt. Auch die Lamination ist als Herstellverfahren denkbar. Eine weitere Art der Herstellung sieht eine Kombination von Coextrudieren und Beschichten oder Lackieren vor. Das Beschichten erfolgt dabei auf das noch nicht thermogeformte deckseitige Coextrudat, die Lackierung wird in der Regel nach dem Tiefziehen oder auch erst als letzter Prozessschritt nach Fertigstellen des verformten mehrschichtigen Bauteiles aufgebracht.

Das Coextrusionsverfahren ist dadurch gekennzeichnet, dass es artgleiche oder fremdartige Kunststoffschmelzen vor dem Verlassen einer Austrittsdüse zusammenführt. Für einen erfindungsgemäßen Aufbau werden für den vorderseitigen Verbundkörper (1) Schmelzen der thermoplastischen Schichten (i), (ii), (iii), (iv) über einen Adapter oder in einer Mehrkanaldüse oder einer Kombination von beidem zusammengeführt und durch die Düse ausgestoßen, über einen Glättkalander geleitet und gekühlt. Die Kühlung erfolgt in der Regel dadurch, dass die Halbzeuge über eine Kühlbahn geleitet werden nach der sie in der Breite zugeschnitten werden. Zusatzstoffe wie Farbmittel, UV-Additive, Mattierungsmittel usw. sind in der Schmelze enthalten und werden dieser entweder vor dem Schmelzen oder während des Schmelzens zugesetzt. Der Längsbeschnitt erfolgt vor dem Abstapeln.

Für den rückseitigen Verbundkörper (2) werden in Analogie Schmelzen der thermoplastischen Schichten (vi), (vii) und (viii) über einen Adapter oder in einer Mehrkanaldüse oder einer Kombination von beidem zusammengeführt und durch die Düse ausgestoßen, über einen Glättkalander geleitet und gekühlt. Für den Fall, dass die Substratschicht (iii) mehr als einschichtig ist müssen für jede weitere Schicht jeweils ein weiterer Coextruder vorgesehen werden. Die Kühlung erfolgt in der Regel dadurch, dass die Halbzeuge über eine Kühlbahn geleitet werden nach der sie in der Breite zugeschnitten werden. Zusatzstoffe wie Farbmittel, UV-Additive, Mattierungsmittel usw. sind in der Schmelze enthalten und werden dieser entweder vor dem Schmelzen oder während des Schmelzens zugesetzt. Der Längsbeschnitt erfolgt vor dem Abstapeln.

Das Auftragen der optionalen oberen und unteren Haftschicht auf den jeweiligen Verbund kann dabei entweder auf das noch nicht thermogeformte rückseitige Coextrudat mittels eines Beschichtungsverfahrens oder aber auch auf das eine dreidimensionale Geometrie bildende thermogeformte Coextrudat erfolgen.

### Verarbeitung der Verbundkörper zu den dreidimensionalen Oberflächenformkörpern

Der vorderseitige Verbundkörper (1) und der rückseitige Verbundkörper (3) stellen jeweils ein flächiges thermoplastisches Halbzeug dar und können beide durch thermisches Verformen (Thermoformen) zu dreidimensional geformten Teilen weiterverarbeitet werden. Dabei werden die flächigen Verbundkörper in einer Tiefziehmaschine über den Erweichungspunkt erhitzt und unmittelbar darauffolgend über eine temperierte Form gezogen. Durch Anlegen von Vakuum an den Luftraum, der sich zwischen thermoplastischem Halbzeug und der temperierten Form befindet, wird das Halbzeug an die Form gepresst, abgekühlt und anschließend entformt. Im Anschluss wird der Formrohling auf das richtige Maß besäumt, wodurch man einen dreidimensionalen Bauteil mit einer definierten, sehr gut reproduzierbaren Geometrie erhält.

### Herstellung des Sandwichverbundes

Zur Herstellung des erfindungsgemäßen Bauteils gibt es verschiedene Verfahrenssequenzen, beispielhaft kann diese wie folgt beschrieben von Statten gehen:
1. Thermisches Verformen des vorderseitigen Verbundkörpers (1) zu einem Oberflächenformkörper.
2. Thermisches Verformen des rückseitigen Verbundkörpers (2) für den Interieurbereich zu einem Interieurformkörper (dieser Schritt kann auch parallel in einer zweiten Thermoformmaschine erfolgen).

Die Reihenfolge der Schritte 1 und 2 ist unerheblich.
3. Einbringen des Oberflächenformkörpers in eine Hälfte einer zweiteiligen Schäumform mit der Farbschicht (ii) oder gegebenenfalls der Deckschicht (i) in Formkontakt.
4. Einbringen des Interieurformkörper in die zweite Hälfte einer zweiteiligen Schäumform mit der rückseitigen Deckschicht (viii) in Formkontakt.

Die Reihenfolge der Schritte 3 und 4 ist unerheblich.
5. Gegebenenfalls Einbringen von Einlegeteilen, Fasern wie Glasfasermatten, Rovings.
6. Einbringen der Komponenten für die Isolierschicht, beispielsweise eines Polyurethansystems, zwischen den beiden Verbundkörpern (1, 3).
7. Schließen der beiden Hälften der Schäumform und Schäumen der Komponenten zu einem Schaum unter Bildung einer Isolierschicht bei geschlossener Form, wobei die Isolierschicht einerseits mit den Rückseiten des Oberflächenformkörpers und des Interieurformkörpers eine Verbindung eingeht und andererseits auch verdichtet.
8. Öffnen der Form und Entnahme des Bauteiles.
9. Folgeprozesse wie zum Beispiel sauberes Besäumen um überstehenden PU Schaum zu entfernen.

Vor den Verfahrensschritten 3 und 4 können die beiden Thermoformteile noch jeweils an der Rückseite, die ausgeschäumt wird, vorbehandelt werden, um in Folge eine verbesserte Schaumhaftung zu erzielen. Dies erfolgt vorzugsweise durch Behandeln der Oberfläche mittels Beflämmen, mittels Plasma (z. B. einem Coronagerät) oder Aufbringen eines Primers. Dieser Verfahrensschritt ist jedoch optional.
1. Thermisches Verformen des vorderseitigen Verbundkörpers (1) zu einem Oberflächenformkörper.
2. Thermisches Verformen des rückseitigen Verbundkörpers (2) für den Interieurbereich zu einem Interieurformkörper (dieser Schritt kann auch parallel in einer zweiten Thermoformmaschine erfolgen).
3. Darstellen eines thermoplastischen Schaumkernes, welcher die Isolierschicht (v) bildet, durch Einblasen von Schaumstoffkügelchen mit Durchmessern von ca. 1-8 mm in eine Form, vorzugsweise poröse Aluminiumformen, und Versintern der Kügelchen mittels Heißdampf (ca. 1,2 bar für EPS (expandierter Polystyrolschaum), ca. 3 bar bei EPP (expandierter Polypropylenschaum)). Nach der Abkühl- und Stabilisierphase können die neu entstandenen Formteile entformt werden.

Die Reihenfolge der Schritte 1 bis 3 ist unerheblich.
4. Einbringen des Oberflächenformkörpers in eine Hälfte einer zweiteiligen Schäumform mit der Farbschicht (ii) oder gegebenenfalls der Deckschicht (i) in Formkontakt.
5. Einbringen des Interieurformkörper in die zweite Hälfte einer zweiteiligen Schäumform mit der rückseitigen Deckschicht (viii) in Formkontakt.

Die Reihenfolge der Schritte 3 und 4 ist unerheblich.
6. Gegebenenfalls Einbringen von Einlegeteilen.
7. Einbringen von Klebstoffen zur Bildung der vorderseitigen und rückseitigen Haftvermittlerschicht (iv) und (vi) an den Rückseiten des Oberflächenformkörpers und Interieurformkörpers.
8. Einbringen des thermoplastischen Schaumkernes, welcher die Isolierschicht bildet.
9. Gegebenenfalls noch Einbringen von Klebraupen zur Verklebung des Oberflächen- und Interieurformkörpers im Randbereich.
10. Schliessen der Form.
11. Reagieren des Klebersystems sodass eine feste Verbindung zwischen der vorderseitigen und rückseitigen Haftvermittlerschicht (iv) und (vi) einerseits und der Isolierschicht (v) andererseits hergestellt wird
12. Öffnen der Form und Entnahme des Bauteiles
13. Gegebenenfalls Folgeprozesse wie zum Beispiel sauberes Besäumen um überstehenden Teile zu entfernen.

Die Figuren zeigen verschiedene Ausführungsbeispiele.
Fig. 1 zeigt an einem allgemeinen Ausführungsbeispiel ein Verbundbauteil
Fig. 2 - 4 zeigen anhand der nachfolgenden Anwendungbeispiele verschiedene Verbundbauteile.

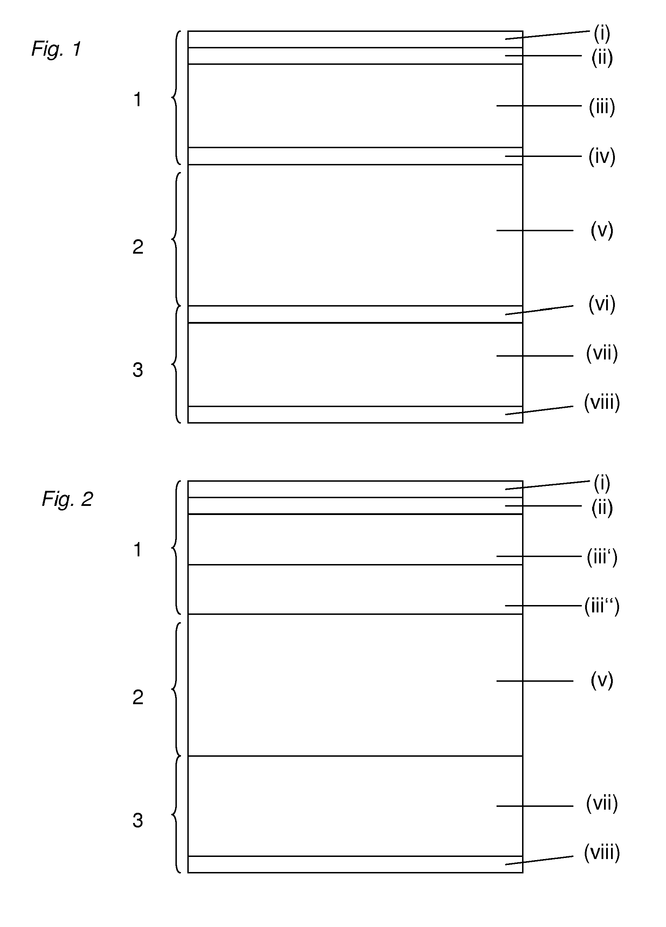

Fig. 1 zeigt schematisch den Aufbau eines allgemeinen Verbundbauteils mit der Reihenfolge der einzelnen Schichten, umfassend einen vorderseitigen Verbundkörper (1), einen rückseitigen Verbundkörper (3) und eine dazwischen angeordnete Isolationsschicht (2). Der vorderseitige Verbundkörper (1) weist eine Deckschicht (i), eine Farbschicht (ii), eine einschichtige Substratschicht (iii) und eine Haftvermittlerschicht (iv) auf, wobei die Substratschicht (iii) als Hauptbestandteil einen thermoplastischen Werkstoff aufweist. Danach kommt die Isolationsschicht (2 oder v) aus einem geschäumten Polymerwerkstoff. Anschließend folgt der rückseitige Verbundkörper (3) mit einer Haftvermittlerschicht (vi), einer einschichtigen Trägerschicht (vii), welche als Hauptbestandteil einen thermoplastischen Werkstoff aufweist, und einer rückseitigen Deckschicht (viii).

### Anwendungsbeispiele

Anhand der nachfolgend gezeigten Anwendungsbeispiele wird die Erfindung genauer erläutert.

| | Beispiel 1 | | | Beispiel 2 | | | Beispiel 3 | | |
|---|---|---|---|---|---|---|---|---|---|
| Schicht | Material | Dicke d¹⁾ | | Material | Dicke d¹⁾ | | Material | Dicke d¹⁾ | |
| (i) | PMMA | 0,029 | | | - | | Lack | 0,018 | |
| (ii) | HI-PMMA | 0,061 | | ASA | 0,030 | | PC | 0,077 | |
| (iii,iii') (iii") | ABS ABS | 0,148 1,098 | | ABS | 0,189 | | PC | 0,808 | |
| (iv) | | | | - | | | ABS/PC | 0,055 | |
| (v) | XPU GF | 5,295 | | XPU | 4,390 | | XPU GF | 3,115 | |
| (vi) | - | | | - | | | - | | |
| (vii) | ABS | 0,250 | | ABS | 0,236 | | ABS | 0,250 | |
| (viii) | ABS matt | 0,50 | | TPU | 0,025 | | ABS | 0,50 | |
| λ²⁾ | | 0,206 | | | 0,049 | | | 0,189 | |
| ∑d³⁾ | | 6,931 | | | 4,87 | | | 4,373 | |

| | | | | | | | | | |
|---|---|---|---|---|---|---|---|---|---|
| ¹⁾ Dicke d: [mm] gemessen mittels Auflicht- oder Durchlichtmikroskopie ²⁾ Wärmeleitfähigkeit λ: [W/mK] gemessen an der jeweiligen Probe nach EN ISO 22007-2:2012 (Ausgabestand 2012-03-01): Kunststoffe - Bestimmung der Wärmeleitfähigkeit und der Temperaturleitfähigkeit, Teil 2: Transientes Flächenquellenverfahren (Hot- Disk- Verfahren), Probekörpergröße mindestens 7 cm im Quadrat. Die Montage der Messsonde erfolgt an der jeweils dickeren Teilschicht des Mehrschichtverbundes, die Gesamtdicke des Messkörpers beträgt mindestens 10 mm, auf einer Unterlage aus PMMA wurden 2 bis 4 Platten übereinander gestapelt, um die mindestens geforderte Probendicke von 10 mm zu erreichen. Für einen guten thermischen Kontakt zur Probenfläche und der Minimierung des Luftspaltes wurde die Sonde beschwert mit einem Anpressdruck von 30 kPa. ³⁾ Gesamtdicke ∑d: [mm] des verformten, mehrschichtigen Bauteiles gemessen mittels Auflicht- oder Durchlichtmikroskopie bzw. errechnet aus der Summer der einzelnen Schichtdicken. | | | | | | | | | |

Beispiel 1: Das Beispiel 1 (Fig. 2) besteht aus einem vorderseitigen Verbundkörper (l), der ein Coextrudat aus vier Schichten ist: Einer transparenten PMMA Schicht als transparente Deckschicht (i), einer Farbschicht (ii) aus HI- PMMA enthaltend 2,5 Gew.% des Farbmittels Titandioxid und einer zweischichtigen Substratschicht (iii', iii"), bestehend jeweils aus eingefärbten ABS. Das Titandioxid wird in der Extrusion in Form eines Farbkonzentrates bestehend aus einem Träger von SAN (Styrol-Acrylnitril- CoPolyer) und einem Anteil von 50% Titandioxid mit 5% dem ABS zugesetzt. Der vorderseitige Verbundkörper wird thermogeformt, und an der Rückseite beflämmt, wodurch eine verbesserte Schaumhaftung erzielt wird. Der rückseitige Verbundkörper (3) besteht aus einer Trägerschicht (vii) aus ABS, enthaltend 1,25 Gew. % des Farbmittels Ruß. Der Ruß wird in der Extrusion in Form eines Farbkonzentrates bestehend aus einem Träger von SAN (Styrol- Acrylnitril- CoPolyer) und einem Anteil von 20% Ruß mit 6,25 % dem ABS zugesetzt. Die rückseitige Deckschicht (viii) besteht aus mattem, eingefärbtem TPU (thermoplastischem Polyurethanelastomer). Auch der rückseitige Verbundkörper wird nach dem Thermoformen rückseitig beflämmt. Beide Tiefziehteile werden jeweils in eine Formhälfte gelegt und anschließend im LFI (Long- Fiber- Injection) Verfahren mit langglasfaser verstärktem PU gefüllt, die Form wird geschlossen, das PU- GF Gemisch reagiert aus. Anschließend wird das Teil der Form entnommen und besäumt.

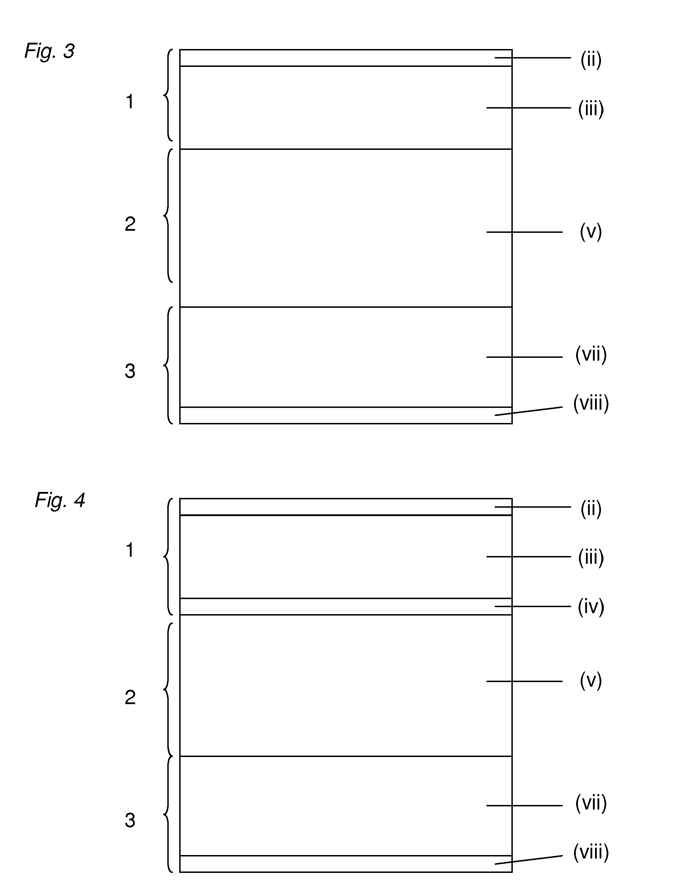

Beispiel 2: Das Beispiel 2 (Fig. 3) besteht aus einem vorderseitigem Verbundkörper (1) in Form eines Coextrudats aus zwei Schichten: Einer Farbschicht (ii) aus ASA (Acrylnitril-Styrol- Alkylacrylat-Terpolymer), enthaltend 10 Gew.% des Farbmittels Titandioxid. Das Titandioxid wird in der Extrusion in Form eines Farbkonzentrates bestehend aus einem Träger von ASA (Acrylnitril-Styrol- Alkylacrylat-Terpolymer) und einem Anteil von 50 Gew.% Titandioxid mit 5% dem ASA zugesetzt. Einer einschichtigen Substratschicht (iii) bestehend aus ABS, enthaltend 2,5 Gew.% des Farbmittels Titandioxid. Das Titandioxid wird in der Extrusion in Form eines Farbkonzentrates bestehend aus einem Träger von SAN (Styrol-Acrylnitril- Copolymer) und einem Anteil von 50 Gew.% Titandioxid mit 5 Gew.% dem ABS zugesetzt. Der vorderseitige Verbundkörper (1) wird thermogeformt, und an der Rückseite beflämmt, wodurch eine verbesserte Schaumhaftung erzielt wird. Der zweischichtige rückseitige Verbundkörper (3) ist ebenfalls ein Coextrudat, bestehend aus einer Trägerschicht (vii) aus ABS, enthaltend 1,25 Gew.% des Farbmittels Ruß. Der Ruß wird in der Extrusion in Form eines Farbkonzentrates bestehend aus einem Träger von SAN (Styrol- Acrylnitril-Copolymer) und einem Anteil von 20 Gew.% Ruß mit 6,25 Gew.% dem ABS zugesetzt. Die rückseitige Deckschicht (viii) besteht aus mattem ABS, enthaltend 1,25 Gew.% des Farbmittels Ruß. Der Ruß wird in der Extrusion in Form eines Farbkonzentrates bestehend aus einem Träger von SAN (Styrol- Acrylnitril- CoPolyer) und einem Anteil von 20 Gew.% Ruß mit 6,25 Gew.% dem ABS zugesetzt. Auch dieser Teil wird nach dem Thermoformen rückseitig beflämmt. Beide Tiefziehteile werden jeweils in eine Formhälfte gelegt und anschließend mit einem Polyurethan- Monomergemisch gefüllt, die Form wird geschlossen und das PU reagiert aus. Anschließend wird der Teil der Form entnommen.

Beispiel 3: Das Beispiel 3 (Fig. 4) besteht aus einem lackierten vorderseitigem Verbundkörper (1), bestehend aus drei Schichten: Der vorderseitige Verbundkörper (1) besteht aus einer eingefärbten Lackschicht als Farbschicht (ii), einer zweischichtigen Trägerschicht (iii', iii") bestehend aus PC (Polycarbonat), enthaltend 2,5 Gew.% des Farbmittels Titandioxid sowie geringe Mengen an Ruß. Das Titandioxid wird in der Extrusion in Form eines Farbkonzentrates bestehend aus einem Träger von SAN (Styrol- Acrylnitril-Copolymer) und einem Anteil von 50 Gew.% Titandioxid und geringen Anteilen an Ruß mit 5 Gew.% dem PC zugesetzt. Darunter befindet sich die optionale obere Haftvermittlerschicht (iv) aus PC-ABS (einem Blend aus 65 Gew. % PC mit 35 Gew. % ABS). Der vorderseitige Verbundkörper (1) wird thermogeformt, und an der Rückseite beflämmt wodurch eine verbesserte Schaumhaftung erzielt wird.

Der zweischichtige rückseitige Verbundkörper (3) besteht aus einer Trägerschicht (vii) aus ABS, enthaltend 1,25 Gew.% des Farbmittels Ruß. Der Ruß wird in der Extrusion in Form eines Farbkonzentrates bestehend aus einem Träger von SAN (Styrol- Acrylnitril-Copolymer) und einem Anteil von 20 Gew.% Ruß mit 6,25 Gew.% dem ABS zugesetzt.

Darunter befindet sich die rückseitige Deckschicht (viii), welche auch aus ABS, enthaltend 1,25 Gew.% des Farbmittels Ruß besteht. Der Ruß wird in der Extrusion in Form eines Farbkonzentrates bestehend aus einem Träger von SAN (Styrol- Acrylnitril- CoPolyer) und einem Anteil von 20 Gew.% Ruß mit 6,25 Gew.% dem ABS zugesetzt. Der Ruß wird in der Extrusion in Form eines Farbkonzentrates bestehend aus einem Träger von SAN (Styrol-Acrylnitril- Copolymer) und einem Anteil von 20 Gew.% Ruß mit 6,25 Gew.% dem ABS zugesetzt.

Auch der rückseitige Verbundkörper (3) wird nach dem Thermoformen rückseitig beflämmt. Beide Tiefziehteile werden jeweils in eine Formhälfte gelegt und anschließend mit einem Glasfaser-Polyurethan Monomerengemisch befüllt, die Form wird geschlossen und das PU reagiert aus. Anschließend wird der Teil der Form entnommen und besäumt. Als letzter Arbeitsschritt erfolgt die Lackierung des vorderseitigen Verbundkörpers, wodurch sich der Farbton des mehrschichtigen verformten Bauteiles ergibt.

Angabe zu den verwendeten Rohstoffen:

| Rohstoff | MFR ¹⁾ | Zug E- Modul ²⁾ | Charpy KSZ ³⁾ |
|---|---|---|---|
| ABS | 4,5 ⁴⁾ | 1820 | 42⁸⁾ |
| ABS matt | 8 ⁴⁾ | 1550 | 9 ⁸⁾ |
| HI- PMMA | 1,8 ⁴⁾ | 2400 | 3 ⁹⁾ |
| PMMA | 3,4 ⁴⁾ | 3200 | n. d. |
| ASA | 5,8 ⁴⁾ | 2000 | 40 ⁸⁾ |
| TPU | 13 ⁶⁾ | n. d. | n. d. |
| PC | 5 ⁵⁾ | 2300 | 25 ⁸⁾ |
| PC/ ABS | 24 ⁷⁾ | 2400 | 56 ⁸⁾ |

| | | | |
|---|---|---|---|
| ¹⁾ MFR gemessen gemäß ISO 1133: 2005 06 01; "Determination of the melt- mass- flow rate (MFR) and the melt volume- flow rate (MVR) of thermoplastics"; []= g/ 10 min; ²⁾ Bruchdehnung gemessen gem. ISO 527-2: 1996 07; "Bestimmung der Zugeigenschaften", [ ]= %, Messung bei RT ³⁾ Charpy Kerbschlagzähigkeit gemessen bei T= 23°C an Probekörpern von 80 x 10 x 4 mm nach EN ISO 179-1:2010 11; Kunststoffe - Bestimmung der Charpy-Schlageigenschaften - Teil 1: Nicht instrumentierte Schlagzähigkeitsprüfung; [ ]= KJ/ mm2 ⁴⁾ MFR analog ¹⁾; Messbedingungen: Temperatur bei 230°C, Belastung bei 3,8 kg ⁵⁾ MFR analog ¹⁾; Messbedingungen: Temperatur bei 300°C, Belastung bei 1,2 kg ⁶⁾ MFR analog ¹⁾; Messbedingungen: Temperatur bei 190°C, Belastung bei 5 kg ⁷⁾ MFR analog ¹⁾; Messbedingungen: Temperatur bei 260°C, Belastung bei 5 kg ⁸⁾ Charpy nach ³⁾; Messbedingungen: 179- 1eA ⁹⁾ Charpy nach ³⁾; Messbedingungen: 179- 2C | | | |

## Patentansprüche

1. Verbundbauteil für ein Karosserieteil eines Fahrzeugs, welches dreidimensional geformt ist, umfassend einen vorderseitigen Verbundkörper (1), einen rückseitigen Verbundkörper (3) und eine dazwischen angeordnete Isolationsschicht (2), wobei der vorderseitige Verbundkörper (1) eine Farbschicht (ii) und eine mindestens einschichtige Substratschicht (iii) aufweist, welche als Hauptbestandteil einen thermoplastischen Werkstoff aufweist, wobei der rückseitige Verbundkörper (3) eine mindestens einschichtige Trägerschicht (vii), welche als Hauptbestandteil einen thermoplastischen Werkstoff aufweist, und eine rückseitige Deckschicht (viii) aufweist, wobei die Isolationsschicht (2) zumindest einschichtig ist und einen geschäumten Polymerwerkstoff aufweist.

2. Verbundbauteil nach Anspruch 1, **dadurch gekennzeichnet, dass** der vorderseitige Verbundkörper (1) auf der Farbschicht (ii) eine vorderseitige Deckschicht (i) aufweist, welche im Wesentlichen transparent ausgebildet ist.

3. Verbundbauteil nach Anspruch 1 oder Anspruch 2, **dadurch gekennzeichnet, dass** die Isolationsschicht (2) mit Fasern verstärkt ist, vorzugsweise mit Glasfasern.

4. Verbundbauteil nach einem der Ansprüche 1 bis 3, **dadurch gekennzeichnet, dass** die Isolationsschicht (2) Zusatzstoffe ausgewählt aus der Gruppe Füllstoffe, Fasern, Katalysatoren, Matten, Rovings und Mischungen daraus enthält.

5. Verbundbauteil nach einem der Ansprüche 1 bis 5, **dadurch gekennzeichnet, dass** es eine Wärmeleitfähigkeit λ gemessen nach EN ISO 22007-2:2012 (Ausgabestand 2012-03-01): Kunststoffe - Bestimmung der Wärmeleitfähigkeit und der Temperaturleitfähigkeit, Teil 2: Transientes Flächenquellenverfahren (Hot- Disk- Verfahren) von maximal 0,60 W/m K, vorzugsweise von maximal 0,40 W/m K, aufweist.

6. Verbundbauteil nach einem der Ansprüche 1 bis 5, **dadurch gekennzeichnet, dass** der vorderseitige Verbundkörper (1) eine zur Isolationsschicht (2) angeordnete Haftvermittlerschicht (iii) aufweist und/oder dass der rückseitige Verbundkörper (3) eine zur Isolationsschicht (2) angeordnete Haftvermittlerschicht (vi) aufweist.

7. Verbundbauteil nach einem der Ansprüche 1 bis 6, **dadurch gekennzeichnet, dass** der geschäumte Polymerwerkstoff der Isolationsschicht (2) ein offenzelliger, geschlossenzelliger oder teilweise offenzelliger und geschlossenzelliger Thermoplast oder Duroplast ist.

8. Verbundbauteil nach einem der Ansprüche 2 bis 7, **dadurch gekennzeichnet, dass** die vorderseitige Deckschicht (i) ein Acrylatpolymer, vorzugsweise PMMA, HI-PMMA oder eine Mischung daraus, oder ein Acrylatcopolymer aufweist.

9. Verbundbauteil nach einem der Ansprüche 1 bis 8, **dadurch gekennzeichnet, dass** die vorderseitige Deckschicht (i) UV-Additive aufweist.

10. Verbundbauteil nach einem der Ansprüche 1 bis 9, **dadurch gekennzeichnet, dass** die Farbschicht (ii) einen thermoplastischen Werkstoff und Farbmittel aufweist.

11. Verbundbauteil nach einem der Ansprüche 1 bis 10, **dadurch gekennzeichnet, dass** die rückseitige Deckschicht (viii) einen thermoplastischen Werkstoff aufweist und gegebenenfalls Farbmittel enhält.

12. Verbundbauteil nach einem der Ansprüche 1 bis 11, **dadurch gekennzeichnet, dass** der vorderseitige Verbundkörper (1) ein Coextrudat aufweist, vorzugsweise ein Coextrudat ist und/oder dass der rückseitige Verbundkörper (3) ein Coextrudat aufweist, vorzugsweise ein Coextrudat ist.

13. Verfahren zur Herstellung eines Verbundbauteils nach einem der Ansprüche 1 bis 12, **gekennzeichnet durch** die Schritte
(a) Bereitstellen des vorderseitigen Verbundkörpers (1),
(b) Bereitstellen des rückseitigen Verbundkörpers (3),
(c) Thermoformen des vorderseitigen Verbundkörpers (1) und des rückseitigen Verbundkörpers (3)
(d) Einlegen der beiden Verbundkörper in jeweils eine Formhälfte eines Formwerkzeugs,
(e) wobei entweder eine vorgeformte Isolationsschicht (2) zwischen die beiden Verbundkörper (1, 3) eingebracht wird und mit den Verbundkörpern (1, 3) **durch** Ausformen im Formwerkzeug verbunden wird oder wobei die Rohstoffe für die Isolationsschicht (2) zwischen die beiden Verbundkörper (1,3) in das verschlossene Formwerkzeug eingebracht werden und während oder nach dem Einbringen der Isolationsschicht (2) ausgeformt werden.

14. Karosserieteil eines Fahrzeugs, umfassend ein Verbundbauteil nach einem der Ansprüche 1 bis 12.

15. Verwendung eines Verbundbauteils nach einem der Ansprüche 1 bis 12 als Karosserieteil für ein Fahrzeug, insbesondere ein das Cockpit und/oder den Kofferraumbereich abdeckendes Karosserieteil.
